# EUROPÄISCHE PATENTSCHRIFT

(11) **EP 4 498 666 B1**
(45) Veröffentlichungstag und Bekanntmachung des Hinweises auf die Patenterteilung: **13.05.2026**
(21) Anmeldenummer: 23187526.1
(22) Anmeldetag: 25.07.2023
(51) Int. Cl.: H04M 3/436

(54) **VERFAHREN, VORRICHTUNG UND COMPUTERPROGRAMM ZUR ÜBERWACHUNG VON TELEFONANRUFEN**
METHOD, APPARATUS AND COMPUTER PROGRAM FOR MONITORING TELEPHONE CALLS
PROCÉDÉ, APPAREIL ET PROGRAMME INFORMATIQUE POUR SURVEILLER DES APPELS TÉLÉPHONIQUES

(43) Veröffentlichungstag der Anmeldung: 29.01.2025
(73) Patentinhaber: Deutsche Telekom AG, 53113 Bonn (DE)
(72) Erfinder: MINOW, Jascha, 64625 Bensheim (DE); JAHN, Carl, 65191 Wiesbaden (DE); EL-MALLOUKI, Said, 56329 St. Goar (DE)
(74) Vertreter: Schwöbel, Thilo K.

(56) Entgegenhaltungen:
- WO-A1-2010/034516
- BALASUBRAMANIYAN V A ET AL: "CallRank: Combating SPIT Using Call Duration, Social. Networks and Global Reputation", INTERNET CITATION, 3 August 2007 (2007-08-03), pages 1 - 8, XP002565207, Retrieved from the Internet <URL:http://www.ceas.cc/2007/papers/paper-63.pdf> [retrieved on 20100120]

## Beschreibung

### Gebiet der Erfindung

Die Erfindung betrifft ein Verfahren, eine Vorrichtung sowie ein Computerprogramm zur Überwachung von Telefonanrufen in einem Telefoniedienst-Netzwerk.

### Hintergrund

In Telefoniedienst-Netzwerken können Teilnehmer untereinander Sprachverbindungen aufbauen. Jedem Teilnehmeranschluss eines Telefoniedienst-Netzwerks ist dabei ein im Netzwerk bekannter Teilnehmeridentifikator (TNI) zugeordnet. Ein TNI kann eine Telefonnummer sein, welche neben einer Anschlussnummer eine Orts- oder Netzvorwahl und/oder eine Ländervorwahl aufweisen kann. Eine TNI kann aber auch ein Identifikator in einem digitalen Telefoniedienst-Netzwerk sein, wie z.B. eine Adresse des Session Initiation Protocols (SIP), eine International Subscriber Identity (IMSI) eines Mobilfunknetzwerks oder ein anderer eindeutiger Identifikator eines Teilnehmeranschlusses. Telefoniedienste können sowohl in analogen Netzwerken, oft als Public Switched Telephone Network (PSTN) oder Plain Old Telephone Service (POTS) bezeichnet, als auch in digitalen Netzwerken bereitgestellt werden. Letztere digitalen Netzwerke können sowohl Festnetz-Netzwerke (z.B. Integrated Services Digital Network (ISDN), Session Intitiation Protocol (SIP)-Netzwerke, usw.) als auch Mobilfunknetze (z.B. 3GPP, 3GPP2, GSM, UMTS, LTE, 5G NR) IP Multimedia Subsystem (IMS)-Netzwerke, umfassen. Während klassische Telefoniedienst-Netzwerke in der Regel leitungsvermittelt sind, arbeiten digitale Netzwerke zumindest in unteren Netzwerkschichten häufig auf paketvermittelter Basis, etwa unter Verwendung des Internet-Protokolls (IP).

Für einen Telefonanruf baut ein anrufender Teilnehmer (im Folgenden als "Originator" bezeichnet) unter Verwendung des TNI eines empfangenden Teilnehmers (im Folgenden auch als "Empfänger" bezeichnet) eine Telefonverbindung auf. Dabei kann ein Telefoniedienst-Netzwerk auch den TNI des Originators bestimmen, bzw. an das Endgerät des Empfängers zur Anzeige weitergeben. Der Empfänger kann beispielsweise anhand einer Anzeige des TNI des Originators entscheiden, ob er den Anruf annimmt oder nicht.

Unabhängig von der Technologie eines Telefoniedienst-Netzwerks führt die Annahme eines Telefonanrufs dazu, dass für die Dauer des Telefonanrufs eine bestimmte, gegebenenfalls variable Übertragungsbandbreite durch das Telefoniedienst-Netzwerk bereitgestellt und aufrechterhalten werden muss.

Die Belastung eines Telefoniedienst-Netzwerks kann z.B. in der Einheit Erlang gemessen werden welche einem Maß für die Anzahl der Telefonanrufe einer bestimmten Dauer pro Zeiteinheit entspricht. Jedes Telefoniedienst-Netzwerk verfügt über eine endliche Belastungsgrenze. Hinzu kommt, dass in digitalen Netzen (inklusive Mobilfunknetzen) die für Telefoniedienste zur Verfügung stehende Bandbreite mit anderen digitalen Diensten (z.B. zur Datenübertragung für Web, Video, Dokumente usw.) geteilt werden muss. Für einen Netzbetreiber besteht daher die Notwendigkeit, die im Netz vermittelten Telefonanrufe zu überwachen, um die Belastung gering zu halten und eine Überlastung des Netzwerks zu vermeiden.

Eine Möglichkeit, die Belastung eines Telefoniedienst-Netzwerks zu reduzieren, besteht darin, unerwünschte Anrufe nicht oder nicht unmittelbar an den Empfänger weiterzuleiten. Ein Nicht-Weiterleiten kann ein Ablehnen des Anrufs umfassen, so dass der Originator keine Möglichkeit hat, den Empfänger zu erreichen. Weiterhin ist es möglich, zunächst eine Warnung auf dem Display des Endgeräts des Empfängers anzuzeigen, dass es sich um einen möglicherweise unerwünschten Anruf handelt, woraufhin der Empfänger auf einen möglicherweise unerwünschten Anruf vorbereitet wird bzw. diesen mit einer gewissen Wahrscheinlichkeit ablehnen wird. Des Weiteren kann ein Nicht-Weiterleiten ein Weiterleiten des Originators an eine Mailbox umfassen. Durch die erwähnte Warnung oder durch ein Weiterleiten des Originators an eine Mailbox kann zumindest in statistischer Hinsicht die Erlang-Belastung des Telefoniedienst-Netzwerks verringert werden. Ein Weiterleiten an eine Mailbox kann auch eine Verifizierung des Originators per Stimme oder Tastatureingabe beinhalten. Auf diese Weise können beispielsweise Telefonanrufe von automatisierten Telefonsystemen (Telefon-Bots, Robocaller) unterbunden werden.

Ein unerwünschter Telefonanruf kann ein Anruf sein, der ohne die ausdrückliche vorherige Zustimmung des Empfängers oder gegen dessen ausdrücklichen Wunsch durchgeführt wird, der vom Empfänger als störend oder unangemessen wahrgenommen wird, oder im Zusammenhang mit illegalen Aktivitäten wie Betrug, Identitätsdiebstahl oder Erpressung steht. Beispiele sind Werbeanrufe, Spam-Anrufe oder Stalking-Anrufe.

Durch entsprechende technische Vorrichtungen, die beispielsweise im Endgerät eines Teilnehmers oder im Telefoniedienst-Netzwerk installiert sind, können Telefonanrufe gefiltert werden, d.h., es wird bestimmt, ob ein Telefonanruf an den Empfänger weitergeleitet wird oder nicht.

Bekannt sind Anruffilter, die auf einem sogenannten Whitelist- bzw. Blacklist-Mechanismus basieren. Dies bedeutet, dass die Anrufe, welche von einem in einer Whitelist gespeicherten Teilnehmeridentifikator ausgehen, stets weitergeleitet werden (möglicherweise mit oder ohne weitere Prüfung), während die Anrufe, die von einem in einer Blacklist gespeicherten Teilnehmeridentifikator ausgehen, blockiert, also nicht weitergeleitet werden. Außerdem ist bekannt, dass bestimmten Teilnehmeridentifikatoren, wie z.B. Telefonnummern, verschiedene Klingeltöne beim Endgerät des Empfängers oder auch Symbole auf dem Display eines Empfänger-Endgerätes zugewiesen werden können.

BALASUBRAMANIYAN V A ET AL: "CallRank: Combating SPIT Using Call Duration, Social. Networks and Global Reputation" bezieht sich auf ein Anruf-Screening-Framework, das einen "Reputationswert" eines Anrufers gegenüber einem Angerufenen verwendet. Der Reputationswert basiert auf der Dauer früherer Anrufe zwischen dem Anrufer und dem Angerufenen. Je länger die Anrufe, desto besser der Reputationswert. WO2010034516 offenbart einen Kreditwert, der zwischen Paaren von Anrufern und Angerufenen bestimmt wird. Aus dem Dokument geht hervor, dass der Kreditwert für Zwecke der Anrufüberprüfung (oder der Überprüfung von Textchats) bestimmt ist. Der Kreditwert hängt von der historischen Anrufdauer zwischen den Parteien ab. Der Kredit muss nicht symmetrisch sein, d. h. er kann je nach Richtung des Anrufs unterschiedlich sein.

Aus Dokument US 8,577,002 B2 ist ein System und ein Verfahren zur Überprüfung von Telefonanrufen zu einer Teilnehmernummer bekannt, das eine Überprüfungsliste von Telefonnummern ("Greylist") umfasst, die verdächtigen Anrufern zugewiesen sind. Den Telefonnummern in der Überprüfungsliste wird weiterhin ein Überprüfungswert zugewiesen. Das Verfahren umfasst des Weiteren Regeln, die definieren, unter welchen Umständen eine Telefonnummer zur Überprüfungsliste hinzugefügt oder von ihr entfernt wird, sowie Regeln betreffend der Änderung des Überprüfungswertes. Daten bezüglich der Anrufe werden von den Teilnehmern empfangen und verarbeitet, und die Telefonnummer wird gemäß den Regeln und basierend auf dem zugewiesenen Überprüfungswert der Telefonnummer überprüft. Teilnehmer können jeder Telefonnummer zu einer persönlichen Liste von Telefonnummern, die blockiert werden sollen ("Blacklist"), oder einer Liste von Telefonnummern, die akzeptiert werden sollen ("Whitelist"), hinzufügen.

Ein dem Anrufer zugewiesener Überprüfungswert kann dazu führen, dass Telefonanrufe von manchen Originatoren irrtümlicherweise nicht weitergeleitet werden, obwohl wenigstens einige der Telefonanrufe durch ein oder mehrere Empfänger durchaus als erwünscht eingestuft werden könnten, während der Anrufer für andere mögliche Empfänger unerwünscht ist. Zwar ist es bekannt, dass ein Teilnehmer eine individuelle Whitelist oder Blacklist von Teilnehmern erstellen kann. Das Eingeben derartiger Listen erfordert eine aufwändige Interaktion und Verwaltung der Listen seitens der Teilnehmer. Die bekannten Verfahren zur Filterung von Telefonanrufen können somit zwar die Belastung eines Telefoniedienst-Netzwerks reduzieren, sind aufgrund der unscharfen Filterwirkung aber nur bedingt für die Benutzer brauchbar. Hinzu kommt, dass derartige Verfahren nur eine statische Momentaufnahme eines Nutzers über seine Einstufung von anderen Teilnehmern darstellen, und eine fortlaufende Datenpflege erfordern, um bei einer sich ändernden Umgebung Schritt halten zu können. Es besteht daher ein Bedarf für Verfahren, Vorrichtungen und/oder Computerprogramme, welche zumindest einen Teil derartiger Nachteile überwinden.

### Zusammenfassung der Erfindung

Aspekte der Erfindung umfassen ein Verfahren gemäß Anspruch 1.

Das Verfahren basiert somit auf einer Liste von Teilnehmerindikatoren (TNI), die beispielsweise in einem Telefoniedienst-Netzwerk gespeichert und verwaltet wird. Beispielsweise kann die Liste einen Teil oder alle TNI von Teilnehmern umfassen, welche als solche im Telefoniedienst-Netzwerk registriert sind. Des Weiteren kann ein Telefoniedienst-Netzwerk Anrufe aus anderen Telefoniedienst-Netzwerken (z.B. Netzwerke von anderen Netzwerk-Betreibern und/oder Netzwerke aus anderen Ländern) mit den entsprechenden TNI entgegennehmen. Derartige Fremdnetz-TNI können ebenfalls Teil der Liste von TNI sein. Jedem TNI aus der Liste ist eine Interaktionsmenge von Teilnehmeridentifikatoren von ausgegangenen und/oder eingegangenen Telefonanrufen zugeordnet. Beispielsweise möge für einen TNI A aus der Liste immer dann ein TNI B in die A zugeordnete Interaktionsmenge aufgenommen werden, wenn zwischen A und B eine Interaktion in Form eines von A zu B ausgehenden Anrufs oder eines bei A von B eingehenden Anrufs festgestellt wird, und B (noch) nicht in der Interaktionsmenge des TNI A zugeordnet war. Die Interaktionsmenge eines TNI (z.B. TNI A) aus der Liste enthält also diejenigen TNI (z.B. TNI B), mit denen mindestens eine Interaktion in Form eines eingehenden oder ausgehenden Anrufs erfolgt ist. Mit anderen Worten, wenn also B der Interaktionsmenge des A zugeordnet ist, dann besteht zwischen A und B eine direkte Telefonanruf-Beziehung.

Durch die Gesamtheit der Zuordnungen von Interaktionsmengen zu jedem TNI aus der Liste werden letztlich Kanten eines Sozialnetzwerk-Graphen definiert. Dies lässt sich auch als ein Baumdiagramm abbilden, wobei die einzelnen Knoten des Baumes den TNI der Teilnehmer entsprechen. Somit ist es möglich, Anrufe der TNI im Telefoniedienst-Netzwerk mithilfe der Sozialnetzwerk-Analyse zu bewerten. Beispielsweise können nicht nur einzelne Teilnehmer im Telefoniedienst-Netzwerk bewertet werden, sondern auch direkte Telefonanruf-Beziehungen und insbesondere indirekte Telefonanruf-Beziehungen in Betracht gezogen werden. In Fortführung des oben genannte Beispiels könnte TNI B ebenfalls der Liste von Teilnehmer-Identifikatoren zugeordnet sein, wobei B wiederum eine Interaktionsliste zugeordnet ist. Beispielsweise könnte ein TNI C Teil der Interaktionsliste des B sein. Während zwischen B und C wiederum eine direkte Telefonanruf-Beziehung besteht, besteht somit zwischen A und C eine indirekte Telefonanruf-Beziehung. Indirekte Telefonanruf-Beziehungen können dann von Bedeutung sein, wenn beispielsweise ein Anruf von A zu C erfolgt.

Des Weiteren ist jedem TNI der Interaktionsmenge eine Interaktions-Metrik des genannten TNI in der Liste bezogen auf den jeweiligen weiteren TNI der Interaktionsmenge zugeordnet. In Fortführung des obigen Beispiels ist also dem TNI A aus der Liste eine Interaktions-Metrik - nachfolgend auch nur kurz als "Metrik" bezeichnet - des A bezogen auf B zugeordnet.

Eine Metrik kann beispielsweise einem TNI, einer Telefonanruf-Beziehung in dem genannten Sozialnetzwerk-Graphen, einer Gruppe von TNI oder einem Telefonanruf zugeordnet sein. Der Wert einer Metrik kann hierbei eine Vertrauenswürdigkeit charakterisieren. Beispielsweise liegt der Wertebereich einer Metrik im Bereich der Fließkommazahlen (mit Dezimalpunkt) zwischen 0.0 und 1.0, wobei eine Metrik von 0.0 keiner oder einer lediglich minimalen Vertrauenswürdigkeit entspricht, und 1.0 einer maximalen oder maximal möglichen Vertrauenswürdigkeit entspricht. Es ist auch jedwede andere technisch sinnvolle Abbildung einer Vertrauenswürdigkeit auf eine Metrik möglich.

Im Rahmen der vorliegenden Offenbarung der Erfindung soll bevorzugt eine Erhöhung einer Metrik als eine Verbesserung der Vertrauenswürdigkeit eingestuft werden, eine Verringerung einer Metrik als eine Verschlechterung der Vertrauenswürdigkeit. Die Erfindung ist jedoch nicht hierauf beschränkt. Vielmehr erkennt der Fachmann sofort, dass die Erfindung auch durch eine entsprechende oder äquivalente Definition einer Metrik realisiert werden kann, wobei eine Verringerung der Metrik einer Erhöhung der Vertrauenswürdigkeit und eine Erhöhung der Metrik einer Verringerung der Vertrauenswürdigkeit entspricht. Je höher die Vertrauenswürdigkeit, desto eher kann bei einer Ausführungsform ein Telefonanruf an den Empfänger weitergeleitet werden, während eine niedrige Vertrauenswürdigkeit bei dieser Ausführungsform eher zu einem Nicht-Weiterleiten eines Anrufs an den Empfänger, einschließlich eines Weiterleitens an eine Mailbox, führt. Alternativ ist eine Weiterleitung unabhängig von der Metrik, oder jedenfalls in einem gewissen Bereich unabhängig von der Metrik (z.B., ab einem Wertebereich größer oder gleich einem ersten Schwellenwert) möglich, wobei die Metrik dem Empfänger zur Anzeige oder anderweitigen Kenntlichmachung übermittelt wird. Dies erlaubt dem Empfänger eine Entscheidung darüber zu treffen, ob ein Anruf angenommen werden soll oder nicht. Eine Metrik erlaubt somit eine zahlenmäßige Bewertung der Vertrauenswürdigkeit eines Anrufs. Der Wert einer Metrik kann beispielsweise mit einem Schwellenwert verglichen werden, um zu einer technisch durchführbaren Entscheidung über ein Weiterleiten oder ein Nicht-Weiterleiten eines Telefonanrufs oder einer entsprechend angepassten Kenntlichmachung (z.B. visuell, unterhalb des Schwellenwerts in einer ersten, oberhalb des Schwellenwerts in einer zweiten Farbe) beim Empfänger zu gelangen.

Die genannte Interaktions-Metrik des TNI (z.B. TNI A) bezogen auf ein TNI aus seiner Interaktionsliste (z.B. TNI B) bewertet also eine direkte Telefonanruf-Beziehung. Damit wird es möglich, nicht nur den einzelnen TNI (z.B. TNI A), sondern auch dessen einzelne Telefonanruf-Beziehungen (z.B. zu B und zu weiteren TNI aus der Interaktionsliste des A) differenziert zu charakterisieren. Beispielsweise kann die Anruf-Metrik eines Telefonanrufs des Originators (z.B. mit TNI A) zu dem Empfänger (z.B. mit TNI B) eine hohe Vertrauenswürdigkeit aufweisen. Diese ist beispielsweise dann der Fall, wenn der Originator A vormals durch den Empfänger B angerufen wurde. Dies kann möglich sein, obwohl die Interaktionsmenge des Originator-TNI (A) ansonsten sehr viele Interaktions-Metriken mit geringer Vertrauenswürdigkeit aufweist (beispielsweise weil der Originator sehr viele weitere Teilnehmer mit nur ausgehenden Anrufen aufweist). Des Weiteren kann die Anruf-Metrik dadurch beeinflusst werden, dass indirekte Beziehungen im Sozialnetzwerk-Graphen bestehen.

Gemäß Aspekten der Erfindung wird der festgestellte Telefonanruf basierend auf der Anruf-Metrik verarbeitet, wobei das Verarbeiten wenigstens ein Weiterleiten des Telefonanrufs an den Empfänger oder ein Nicht-Weiterleiten des festgestellten Telefonanrufs umfasst. Das Nicht-Weiterleiten kann, wie oben erläutert, beispielsweise einem Abweisen des Telefonanrufs, aber auch einer Anzeige einer Warnung auf dem Endgeräte-Display des Empfängers oder einem Weiterleiten des Anrufs auf eine Mailbox entsprechen.

In einer Abwandlung der vorgenannten Ausgestaltung sind auch Ausgestaltungen der Erfindung denkbar, bei denen auf die Verwendung einer Interaktions-Metrik verzichtet wird, und jedem Teilnehmer eine absolute Kennzahl - anstelle einer Kennzahl bezogen auf einen weiteren Teilnehmer /TNI - zur Charakterisierung der Vertrauenswürdigkeit zugeordnet wird. Beispielsweise kann sich das Telefonierverhalten des Teilnehmers bei dieser Kennzahl widerspiegeln. Bei einer derartigen Ausgestaltung kann sich das Bestimmen der Anruf-Metrik für den Telefonanruf darauf beschränken, dass der anrufende Teilnehmer eine hohe Kennzahl aufweist, d.h., eine Kennzahl, die über einem Schwellenwert liegt, und sich diese Kennzahl dadurch ergeben hat, dass er in der Vergangenheit mit weiteren Teilnehmern in Beziehungen im Sozialnetzwerk-Graphen steht, und diese weiteren Teilnehmer auch in Beziehung zum angerufenen Teilnehmer stehen.

Bevorzugt erfolgt weiterhin ein Aktualisieren der dem Originator und/oder der dem Empfänger zugeordneten Interaktionsmenge basierend auf mindestens einem Parameter des Telefonanrufs, wobei das Aktualisieren vorzugsweise eine Anpassung der Interaktions-Metrik umfasst. In einigen Ausführungsbeispielen kann der mindestens eine Parameter des Telefonanrufs die Annahme oder Nichtannahme des Telefonanrufs durch den Empfänger oder die Dauer des Gesprächs umfassen. Vereinfacht gesprochen beeinflusst somit das Ergebnis des Telefonanrufs die Interaktionsmengen.

Durch das Aktualisieren, in der Liste von Teilnehmer-Identifikatoren, der dem Originator zugeordneten Originator-Interaktionsmenge und der dem Empfänger zugeordneten Empfänger-Interaktionsmenge basierend auf mindestens einem Parameter des Telefonanrufs wird die Originator-Interaktionsmenge für künftige Telefonanrufe aktualisiert. Beispielsweise kann, im Falle der Annahme des Anrufes oder eines Gesprächs über einem gewissen Schwellenwert, eine neue direkte Telefonanruf-Beziehung durch Zuordnung des Empfängers zu der Interaktionsmenge des Originators aufgenommen werden. Des Weiteren kann eine neue direkte Telefonanruf-Beziehung durch Zuordnung des Originators in der Interaktionsmenge des Empfängers aufgenommen werden. Weiterhin können beispielsweise die entsprechenden Interaktions-Metriken in der Originator-Interaktionsmenge basierend auf dem Ergebnis des Anrufs aktualisiert werden. Dies kann in einigen Fällen nicht nur die Interaktions-Metrik des Originators bezogen auf den Empfänger des Anrufs betreffen, sondern auch die Interaktions-Metriken des Originators bezüglich weiterer TNI seiner Interaktionsmenge. Somit wird es möglich, dass das Ergebnis des Anrufs sich nicht nur auf die Telefonanruf-Beziehung zum Empfänger auswirkt, sondern auch auf weitere Telefonanruf-Beziehungen des Originators. Das Ergebnis des Telefonanrufs kann eine Reihe von Ereignissen umfassen, z.B., dass der Telefonanruf aktiv durch den Empfänger abgewiesen wurde, dass der Telefonanruf nicht angenommen und durch das Telefoniedienst-Netzwerk nach Zeitablauf beendet wurde (weil "niemand rangegangen" ist), dass der Telefonanruf angenommen wurde und das Telefongespräch x Sekunden gedauert hat, oder dass der Originator einen nicht angenommen Anruf nach x Sekunden abgebrochen hat. Das Aktualisieren der entsprechenden Metriken kann in Abhängigkeit derartiger Ereignisse erfolgen. Beispielsweise kann eine Metrik nicht nur basierend darauf realisiert werden, ob eine Annahme des Anrufs eingetreten ist, sondern auch zum Beispiel von der Dauer eines entsprechenden angenommenen Anrufs, oder von der Dauer bis ein nicht angenommener Anruf durch den Originator abgebrochen wurde.

Aufgrund der Berücksichtigung direkter und/oder indirekter Telefonanruf-Beziehungen zwischen den Teilnehmern in einem Telefoniedienst-Netzwerk wird Zuverlässigkeit bzw. Brauchbarkeit einer Überwachung von Telefonanrufen im Hinblick auf das Weiterleiten bzw. Nicht-Weiterleiten von festgestellten Telefonanrufen verbessert. Insbesondere kann das Verfahren in einem Telefoniedienst-Netzwerk zu einer Verringerung der Anruflast basierend auf einer zuverlässigen und für den Benutzer brauchbaren automatischen Filterung von Telefonanrufen eingesetzt werden.

In einigen Ausführungen der Erfindung kann, wenn die dem Originator-TNI zugeordnete Interaktionsmenge von weiteren Teilnehmeridentifikatoren keine Zuordnung des Empfänger-TNI umfasst, das Aktualisieren der dem Originator und/oder der dem Empfänger zugeordneten Interaktionsmenge eine Aufnahme des Empfänger-TNI in der dem Originator-TNI zugeordnete Interaktionsmenge und/oder eine Aufnahme der Originator-TNI in der dem Empfänger-TNI zugeordneten Interaktionsmenge umfassen.

In diesem Fall enthält die Interaktionsmenge des Originator-TNI keine Zuordnung des Empfängers. Hierbei kann auch vorgesehen sein, dass eine initiale Metrik für die Telefonanruf-Beziehung zwischen dem Originator und dem Empfänger verwendet wird. Falls der Originator erstmalig im Telefoniedienst-Netzwerk mit einem Anruf an den Empfänger in Erscheinung tritt, kann der Originator-TNI in die Liste von Teilnehmer-Identifikatoren aufgenommen werden, und der Empfänger-TNI kann der Interaktionsmenge des Originator-TNI mit der initialen Interaktions-Metrik zugeordnet werden.

Die initiale Metrik kann dabei auf jeden beliebigen Wert im Rahmen des Wertebereichs der verwendeten Metrik gesetzt werden. Für einen neu hinzugekommenen Teilnehmer bzw. für eine neue Telefonanruf-Beziehung hat der Wert der initialen Metrik die Bedeutung eines "Vertrauensvorschusses". Mögliche Werte liegen bei 0.5 oder 0.8 oder auch bei 1.0 (in dem oben genannten Wertebereich zwischen 0.0 und 1.0).

Das Bestimmen der Anruf-Metrik für eine neue Telefonanruf-Beziehung erfolgt dann basierend auf der Interaktionsmenge des Originator-TNI und der initialen Interaktions-Metrik des Originators bezogen auf den Empfänger. Für den Fall, dass die Interaktionsmenge des Originator-TNI bereits weitere TNI umfasst (z.B. weil der Originator bereits im Telefoniedienst-Netzwerk bekannt ist und vormalige Telefonanrufe getätigt hat), kann die Anruf-Metrik nicht nur von der initialen Interaktions-Metrik bezüglich des Empfängers abhängen, sondern auch von den Interaktions-Metriken der bereits vorhandenen TNI. Sind beispielsweise die Interaktions-Metriken der übrigen TNI in der Interaktionsliste des Originators überwiegend gering, so kann die Anruf-Metrik gegenüber der initialen Metrik deutlich verringert werden, so dass dem Anruf des Originators zu dem Empfänger bereits eine geringe Anruf-Metrik zugeordnet wird. Der mit der initialen Metrik gegebene "Vertrauensvorschuss" wird also bei der Bestimmung der Anruf-Metrik aufgrund der Anrufhistorie des Originators mit seinen weiteren Telefonanruf-Beziehungen bewertet.

Hat der Originator keine weiteren TNI in der Interaktionsmenge (z.B., weil der Originalor erstmalig im Telefoniedienst-Netzwerk erscheint), so kann die initiale Metrik und somit der "Vertrauensvorschuss" als Anruf-Metrik übernommen werden. Jedoch führt eine entsprechende Aktualisierung der Metrik basierend auf dem Ergebnis des Telefonanrufs sowie eine entsprechende Aktualisierung der Metriken basierend auf Ergebnissen von künftigen Telefonanrufen (sowohl an den Empfänger als auch weitere Teilnehmer) zu einer Konvergenz der entsprechenden Interaktions-Metriken des Originators. Somit werden Entscheidungen in Bezug auf ein Annehmen oder ein Nicht-Annehmen von Anrufen des Originators mit der Anzahl von getätigten Anrufen zuverlässiger.

In einigen Ausführungen der Erfindung kann das Aktualisieren der dem Originator und/oder der dem Empfänger zugeordneten Interaktionsmenge ein Erhöhen der Interaktions-Metrik des Originators bezogen auf den Empfänger umfassen, wenn der Telefonanruf angenommen wurde, wobei die Erhöhung abhängig von der Dauer des Telefonanrufs sein kann.

Sofern ein Anruf des Originators durch den Empfänger angenommen wurde, kann dies die Vertrauenswürdigkeit des Originators innerhalb der Telefonanruf-Beziehung mit dem Empfänger erhöhen. Beispielsweise kann die der Wertebereich der Metrik im Bereich der Fließkommazahlen (mit Dezimalpunkt) zwischen 0.0 und 1.0, liegen, wie oben beschrieben. Dann kann die Metrik Interaktions-Metrik des Originators bezogen auf den Empfänger um einen Betrag bis hin zum maximal möglichen Wert (z.B. 1.0) erhöht werden. Möglich ist auch eine geringere Erhöhung, was bedeutet, dass die Vertrauenswürdigkeit des Originators innerhalb der der Telefonanruf-Beziehung mit dem Empfänger schrittweise verbessert wird. Beispielsweise kann die Metrik in Schrittweiten von 0.1 erhöht werden. In einigen Ausführungen kann eine Erhöhung abhängig von dem aktuellen Wert der Interaktions-Metrik erfolgen. Eine Erhöhung kann jedoch auch abhängig von den weiteren Interaktions-Metriken des Originators gering bzw. zu Null ausfallen, wenn z.B. eine überwiegende Zahl von Interaktions-Metriken des Originators einen geringen Wert aufweisen. Dies könnte darauf hindeuten, dass der Originator eher unerwünschte Anrufe durchführt, von denen lediglich einige wenige Telefonanrufe durch die Empfänger angenommen werden.

In einigen Fällen kann die Erhöhung jedoch von der Dauer des angenommenen Telefonanrufs abhängen. Sofern es sich beispielsweise um einen unerwünschten Anruf handelt, so ist in der Regel von einer verkürzten Dauer des Telefonats auszugehen. Daher könnte eine verlängerte Dauer des Telefonanrufs auf einen erwünschten Anruf hindeuten. Beispielsweise könnte die Interaktions-Metrik bei einem Anruf mit einer Gesprächsdauer von weniger als 60 Sekunden um einem ersten Wert erhöht werden und eine Gesprächsdauer länger als 60 Sekunden um einen zweiten Wert erhöht werden, der größer ist als der erste Wert.

In einigen Ausführungen der Erfindung kann das Aktualisieren der dem Originator und/oder der dem Empfänger zugeordneten Interaktionsmenge ein Verringern der Interaktions-Metrik des Originators bezogen auf den Empfänger umfasst, wenn der Anruf nicht angenommen wurde, durch den Empfänger abgelehnt wurde oder wenn die Dauer des Anrufs kürzer als ein Anrufdauer-Schwellwert war.

Bei einer Klasse von Spam-Anrufen ("Ping-Anrufe") klingelt das Telefon des Opfers nur sehr kurz, so dass der Empfänger keine Chance hat, den Anruf anzunehmen. Auf dem Display des Empfänger-Endgeräts wird dann ein verpasster Anruf angezeigt, der bei Rückruf erhöhte Telefongebühren verursachen kann. In Reaktion auf derartig kurze Anrufe kann die Interaktions-Metrik des Originators bezogen auf den Empfänger verringert werden. Die Verringerung kann auch von der Dauer des Anrufs abhängig sein, ohne dass der Empfänger diesen angenommen hat, z.B. wenn der Originator den Anruf nach weniger als 2 Sekunden abbricht. Des Weiteren kann angenommen werden, dass ein Anruf unerwünscht ist, wenn er durch den Empfänger bewusst abgelehnt wurde - jedenfalls dann, wenn dies mehrfach erfolgt. Weiterhin kann die Interaktions-Metrik der Telefonanruf-Beziehung verringert werden, wenn die Dauer des Anrufs kürzer als ein Anrufdauer-Schwellwert war. Der Anrufdauer-Schwellwert kann in diesem Fall auf einige Sekunden gesetzt werden (z.B. 15 Sekunden), entsprechend einer Zeitspanne, die der Empfänger benötigt, um herauszufinden, dass es sich um einen unerwünschten Anruf handelt.

Die obigen Beispiele betreffen insbesondere das Aktualisieren der Liste von Teilnehmer-Identifikatoren. Dies hat zur Folge, dass sich ein Erhöhen oder Verringern der Interaktions-Metriken erst ab dem nächsten Anruf auswirkt. Dagegen kann ein Bestimmen der Anruf-Metrik bereits Auswirkungen auf den aktuell festgestellten Anruf haben. In einigen Ausführungen der Erfindung kann das Aktualisieren und/oder das Bestimmen der Anruf-Metrik daher umfassen: Bestimmen einer ersten Anzahl von TNI in der Interaktionsmenge des Originators, welche mindestens einen eingegangenen Anruf aufweisen; Bestimmen einer zweiten Anzahl von TNI in der Interaktionsmenge des Originators, welche nur vom Originator ausgegangene Anrufe aufweisen; wobei die Interaktions-Metrik des Originators bezogen auf den Empfänger und/oder die Anruf-Metrik erhöht wird, falls das Verhältnis aus der ersten Anzahl und der zweiten Anzahl oberhalb eines Anrufrichtungs-Schwellenwertes liegt.

Derartige Ausführungen können neben der Interaktions-Metrik einer Telefonanruf-Beziehung auch Zähler umfassen, welche die Anzahl eingehender bzw. ausgehender Anrufe in einer Telefonanruf-Beziehung zwischen einem Originator und einem Empfänger registrieren. Von einem TNI, welches für unerwünschte Anrufe (z.B. für Telemarketing) genutzt wird, geht eine höhere Anzahl von Anrufen aus als auf diesem TNI eingeht. Jedoch ist es nicht auszuschließen, dass auch eine gewisse Anzahl von eingehenden Anrufen zu verzeichnen ist. Von einem TNI, welcher nicht für unerwünschte Anrufe genutzt wird, kann das Verhältnis von eingehenden zu ausgehenden Anrufen ausgeglichener sein. Daher kann bei einem TNI, welcher auch eine hohe Anzahl von eingehenden Anrufen verzeichnet, davon ausgegangen werden, dass er vertrauenswürdig ist. Zusätzlich oder alternativ kann die Anruf-Metrik gegenüber der Interaktions-Metrik des Originators bezogen auf den Empfänger verringert werden, falls das Verhältnis aus der ersten Anzahl und der zweiten Anzahl unterhalb eines Anrufrichtungs-Schwellenwertes liegt. In diesem Fall gehen deutlich mehr Anrufe von dem Originator aus als bei ihm eingehen, was auf einen Anschluss hindeutet, von dem häufig unerwünschte Anrufe ausgehen.

Insbesondere können auf diese Weise, wie oben beschrieben, TNI identifiziert werden, von welchen möglicherweise viele unerwünschte Anrufe ausgehen, wohingegen bei TNI, welche nicht für derartige Aktivitäten verwendet werden, ein eher ausgeglichenes Verhältnis zwischen eingehenden und ausgehenden Anrufen besteht.

In einigen Ausführungen der Erfindung kann das Bestimmen der Anruf-Metrik ein Feststellen umfassen, ob die Interaktionsmenge des Originators den Empfänger-TNI mit wenigstens einem beim Originator eingegangenen Telefonanruf aufweist, wobei die Anruf-Metrik gegenüber der Interaktions-Metrik des Originators bezogen auf den Empfänger erhöht wird, falls die Interaktionsmenge des Originators den TNI des Empfängers mit mindestens einer ersten Anzahl beim Originator eingegangenen Anrufe aufweist, und/oder wobei die Anruf-Metrik gegenüber der Interaktions-Metrik des Originators bezogen auf den Empfänger verringert wird, falls die Interaktionsmenge des Originators den TNI des Empfängers mit mindestens einer zweiten Anzahl vom Originator ausgegangene Anrufe aufweist.

Derartige Ausführungen der Erfindung betreffen insbesondere die Telefonanruf-Beziehung zwischen einem bestimmten Originator und einem bestimmten Empfänger. Hiermit kann einer Form von Telefon-Belästigung begegnet werden, die von einer Person ausgeht und sich gegen eine andere Person richtet (Stalking). Hierbei wird die Anruf-Metrik erhöht, falls mindestens eine erste Anzahl von Telefonanrufen vom Empfänger zum Originator ausgegangen sind. Hierbei wird angenommen, dass vom Originator ausgehende Anrufe durch den Empfänger erwünscht sind, wenn der Empfänger selbst den Originator einige Male angerufen hat. Andererseits könnten Anrufe des Originators beim Empfänger unerwünscht sein, wenn dieser den Empfänger mit mindestens einer zweiten Anzahl von Anrufen anruft. In einigen Ausführungen kann die Verringerung davon abhängig sein, ob die zweite Anzahl von beim Originator ausgehenden Anrufen (deutlich) höher ist als die erste Anzahl von eingehenden Anrufen.

In einigen Ausführungen der Erfindung kann das Bestimmen der Anruf-Metrik erhältlich sein durch: Abbilden einer Beziehung zwischen Empfänger-TNI und Originator-TNI in einem Baumdiagramm; Feststellen, ob der Empfänger-TNI als Ergebnis einer N-Stufigen Suche im Baumdiagramm ausgehend dem Originator-TNI oder der dem Originator-TNI zugeordneten Interaktionsmenge als auffindbar erhältlich ist. Dabei kann die Anruf-Metrik gegenüber der Interaktions-Metrik des Originators bezogen auf den Empfänger nicht verändert oder verringert werden, falls die Anzahl N der Suche mehr als einem Schwellwert von Stufen entspricht.

In einigen Fällen besteht zwischen dem Originator und dem Empfänger zwar keine direkte Telefonanruf-Beziehung, jedoch eine indirekte. Dies ist beispielsweise dann der Fall, wenn der Empfänger-TNI nicht Teil der Interaktionsmenge des Originators ist, jedoch Teil der Interaktionsmenge eines dritten TNI, wobei der dritte TNI wiederum Teil der Interaktionsmenge des Originators ist. In derartigen Fällen sind sowohl der Empfänger als auch der Originator des Anrufs Teil eines Sozialnetzwerks des Dritten. Die Ausführungsbeispiele umfassen also die Feststellung, ob zwischen dem Originator und der Empfänger des Telefonanrufs direkte oder indirekte Telefonanruf-Beziehungen bestehen und wenn ja, mit wie vielen Stufen (Knoten).

Da die Interaktionsmenge des Originators TNI enthält, welche wiederum einer Interaktionsmenge zugeordnet sind, kann der Empfänger ausgehend vom Originator als Ergebnis einer N-Stufigen Baumsuche ausgehend von der dem Originator-TNI zugeordneten Interaktionsmenge als auffindbar erhältlich sein. Eine Baumsuche kann dabei rekursiv definiert sein, wobei die erste Stufe der Baumsuche einer Suche nach dem Empfänger-TNI in der Interaktionsmenge des Originators entspricht und die N-te Stufe der Baumsuche ab der zweiten Stufe einer Suche nach dem Empfänger-TNI in der Interaktionsmenge von jedem TNI der Interaktionsmenge der (N-1)-ten Stufe der Baumsuche entspricht.

Es ist jedoch zu beachten, dass die Feststellung, ob der Empfänger-TNI als Ergebnis einer N-Stufigen Baumsuche ausgehend von der dem Originator-TNI zugeordneten Interaktionsmenge als auffindbar erhältlich ist, auch durch andere Verfahrensschritte als durch die Schritte einer rekursiven Baumsuche ausgehend von dem Originator-TNI. Beispielsweise könnten Sozialnetzwerke mit direkten und indirekten Telefonanruf-Beziehungen bereits in Form von Clustern in einer Vorrichtung des Telefoniedienst-Netzwerks gespeichert sein. Des Weiteren könnten indirekte Telefonanruf-Beziehungen wenigstens zu einigen TNI in der Liste Teilnehmer-Identifikatoren eines Telefoniedienst-Netzwerks bereits indexiert sein, so dass indirekte Telefonanruf-Beziehungen zu einem TNI in der Liste direkt abrufbar sind. Somit kann das Bestimmen der Anruf-Metrik sowie die oben genannte Feststellung jegliche Schritte umfassen, welche das Ergebnis der Feststellung hervorbringen, ob der Empfänger-TNI über N Knoten in einem Sozialnetzwerk erreichbar ist, welches die direkten und indirekten Telefonanruf-Beziehungen erfasst.

In einigen Ausführungen der Erfindung kann die Anruf-Metrik gegenüber der Interaktions-Metrik des Originators bezogen auf den Empfänger nicht verändert oder verringert werden, falls die Anzahl Stufen der Baumsuche mehr als einem Schwellwert von Stufen entspricht. In einigen von derartigen Ausführungen kann die Anruf-Metrik zunächst erhöht werden, wenn beispielsweise eine indirekte Telefonanruf-Beziehung in einer zweiten Stufe zwischen Originator und Empfänger über genau einen dritten TNI besteht. Ab einem bestimmten Grad oder Stufe einer indirekten Telefonanruf-Beziehung kann bei dieser Ausführungsform davon ausgegangen werden, dass ein Anruf des Originators beim Empfänger als vertrauenswürdiger einzustufen ist. Beispielsweise könnte eine indirekte Telefonanruf-Beziehung zwischen dem Originator und dem Empfänger über mehr als 2 Stufen nicht für eine erhöhte Vertrauenswürdigkeit sprechen.

In einigen Fällen kann die Anruf-Metrik gegenüber der Interaktions-Metrik des Originators bezogen auf den Empfänger sogar entsprechend der Anzahl Stufen der Baumsuche verringert werden. In anderen Fällen ist es jedoch möglich, dass die Interaktions-Metrik des Originators in Bezug auf den Grad der indirekten Telefonanruf-Beziehung nicht verändert wird, falls ein gewisser Grad (d.h., ein Schwellwert von Stufen) überschritten wird. Beispielsweise könnten mehr als zwei Stufen nicht zu einer Veränderung der Interaktion-Metrik führen. In diesem Fall kann die Feststellung der Anzahl Stufen in der Telefonanruf-Beziehung zwischen dem Originator und dem Empfänger bei dem genannten Schwellwert von Stufen abgebrochen werden.

In einigen Ausführungen der Erfindung kann die Anruf-Metrik gegenüber der Interaktions-Metrik des Originators bezogen auf den Empfänger entsprechend einer Häufigkeit, wie oft der Empfänger-TNI in einer Stufe der Baumsuche als auffindbar erhältlich, ist erhöht werden. In derartigen Ausführungen können indirekte Telefonanruf-Beziehungen über mehrere dritte Teilnehmer des Telefoniedienst-Netzwerks zwischen dem Originator und dem Empfänger bestehen. Derartige indirekte Mehrfachbeziehungen können die Vertrauenswürdigkeit des Originators gegenüber dem Empfänger erhöhen.

In einigen Ausführungen der Erfindung kann die Anruf-Metrik gegenüber der Interaktions-Metrik des Originators bezogen auf den Empfänger verringert werden, wenn ein Anrufaufkommen im Telefoniedienst-Netzwerk einen Netzwerklast-Schwellwert überschreitet. Wenn ein Anrufaufkommen, d.h., eine Anzahl von Telefonanrufen einer bestimmten Dauer pro Zeiteinheit (z.B. gemessen in Erlang) größer ist als eine Anzahl an Anrufen, welche das Netzwerk übertragen kann, so kann es zu einer Blockierung des Netzwerks kommen. Mit steigendem Anrufaufkommen steigt insbesondere die Wahrscheinlichkeit, dass ein Telefonanruf aufgrund der Überlastung blockiert ist. Um eine Blockierung aufgrund von Überlastung des Netzwerks zu verhindern, können die Anruf-Metriken von Anrufen im Netzwerk abhängig vom Anrufaufkommen im Telefoniedienst-Netzwerk verringert oder erhöht werden. Insbesondere kann eine Anruf-Metrik gegenüber der Interaktions-Metrik des Originators bezogen auf den Empfänger dann verringert werden, wenn ein Anrufaufkommen im Telefoniedienst-Netzwerk einen Schwellwert der Netzwerklast überschreitet. In diesen Fällen wird ein zusätzlicher Anteil von Anrufen nicht weitergeleitet, der bei niedrigerer Netzwerklast an den Empfänger weitergeleitet werden würde. Es wird also "strenger" danach gefiltert, ob es sich um erwünschte oder unerwünschte Anrufe handelt, wobei Anrufe mit hoher Vertrauenswürdigkeit weiterhin an den Empfänger weitergeleitet werden und der zusätzlich nicht-weitergeleitete Anteil eher aus unerwünschten Anrufen besteht. Damit kann also eine Priorisierung von Anrufen vorgenommen werden, die aus Benutzersicht akzeptabel ist.

Aspekte der Erfindung beinhalten weiterhin eine Vorrichtung gemäß Anspruch 13.

Aspekte der Erfindung beinhalten weiterhin ein Computerprogramm gemäß Anspruch 14.

### Detaillierte Beschreibung

Nachfolgend werden einige wichtige nicht-abschließende Aspekte der Erfindung anhand von Figuren erläutert.
Es zeigen:
Fig. 1: ein Telefoniedienst-Netzwerk gemäß Aspekten der Erfindung;
Fig. 2: eine erste Liste von Teilnehmeridentifikatoren (TNI) gemäß Aspekten der Erfindung;
Fig. 3: eine zweite Liste von Teilnehmeridentifikatoren (TNI) gemäß Aspekten der Erfindung;
Fig. 4: eine dritte Liste von Teilnehmeridentifikatoren (TNI) gemäß Aspekten der Erfindung;
Fig. 5: eine vierte Liste von Teilnehmeridentifikatoren (TNI) gemäß Aspekten der Erfindung;
Fig. 6: ein Ablaufdiagramm des Verfahrens zur Überwachung von Telefonanrufen gemäß Aspekten der Erfindung.

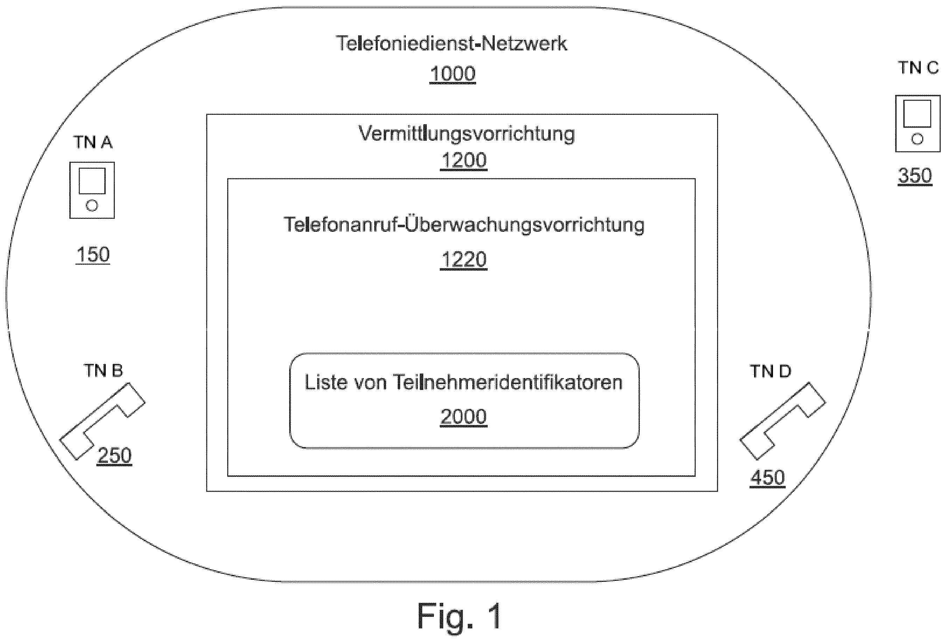

Fig. 1 zeigt ein beispielhaftes Telefoniedienst-Netzwerk gemäß Aspekten der Erfindung. Das Telefoniedienst-Netzwerk 1000 möge ein Festnetz-Telefoniedienst-Netzwerk, z.B. ein PSTN sein, ein Telefoniedienst-Netzwerk eines Mobilfunkbetreibers, oder eine Kombination aus beiden.

Das Telefoniedienst-Netzwerk 1000 umfasst exemplarisch drei Benutzer, den Teilnehmer A 150, den Teilnehmer B 250 sowie den Teilnehmer D 450, deren Teilnehmeranschlüsse im Telefoniedienst-Netzwerk 1000 registriert und verwaltet werden, wohingegen der Teilnehmer Anschluss eines Teilnehmers C 350 in einem Netzwerk außerhalb des Telefoniedienst-Netzwerks 1000 registriert und verwaltet wird (z.B. in einem Netzwerk eines anderen Netzwerkbetreibers und/oder eines anderen Landes). Die betrachteten Anschlüsse der Teilnehmer A 150, B 250, C 350 und D450 können sowohl Festnetzanschlüsse als auch Mobiltelefonanschlüsse sein, wobei jeder dieser Teilnehmer durch einen eindeutigen Teilnehmeridentifikator (TNI) identifizierbar ist, der z.B. eine Adresse des Session Initiation Protocols (SIP), eine International Subscriber Identity (IMSI) eines Mobilfunknetzwerks oder ein anderer eindeutiger Identifikator eines Teilnehmeranschlusses sein kann.

Das Telefoniedienst-Netzwerk 1000 umfasst weiterhin eine Vermittlungsvorrichtung 1200, welche Telefongespräche zwischen Teilnehmer-Endgeräten im Telefoniedienst-Netzwerk 1000 sowie von und zu Teilnehmer-Endgeräten außerhalb des Telefoniedienst-Netzwerks 1000 vermittelt.

Die Vermittlungsvorrichtung 1200 umfasst weiterhin eine Telefonanruf-Überwachungsvorrichtung 1220. Die Telefonanruf-Überwachungsvorrichtung 1220 ist dazu eingerichtet, das erfindungsgemäße Verfahren gemäß der vorliegenden Offenbarung der Erfindung auszuführen. Beispielsweise umfasst die Telefonanruf-Überwachungsvorrichtung 1220 einen Prozessor, auf dem Software ausgeführt werden kann, beispielsweise ein Computerprogramm, welches Programmanweisungen umfasst, welche, wenn das Programm durch einen Prozessor ausgeführt wird, diesen dazu veranlassen, alle Schritte eines erfindungsgemäßen Verfahrens zur Überwachung von Telefonanrufen gemäß der vorliegenden Offenbarung der Erfindung auszuführen. Es ist jedoch auch möglich, dass die Telefonanruf-Überwachungsvorrichtung 1220 dedizierte Hardware umfasst, welche dazu eingerichtet ist, das Verfahren gemäß der vorliegenden Offenbarung der Erfindung auszuführen. Alternativ oder zusätzlich kann die Überwachungseinrichtung eine Kombination aus Hardware und Software umfassen.

Die Telefonanruf-Überwachungsvorrichtung 1220 kann des Weiteren eine Liste von Teilnehmeridentifikatoren 2000 gemäß der vorliegenden Erfindung umfassen. Die Liste 2000 kann in einem geeigneten festen oder flüchtigen Speicher gespeichert sein. Die Telefonanruf-Überwachungsvorrichtung 1220 kann Information von der Liste von Teilnehmeridentifikatoren 2000 lesen und auch Information in der Liste 2000 schreiben, löschen und/oder verändern.

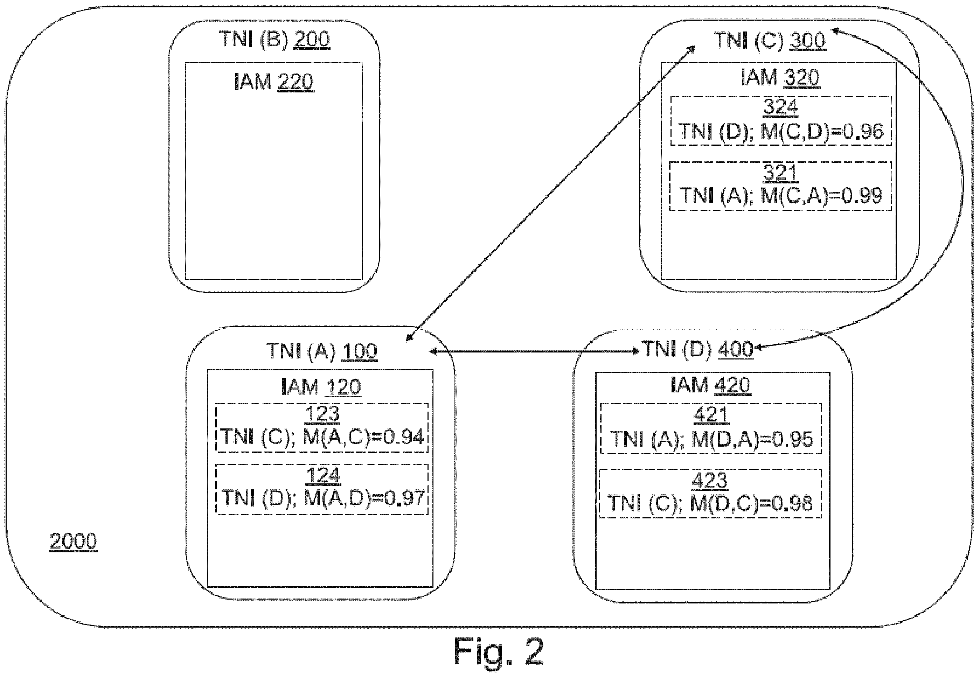

Fig. 2 zeigt eine erste Liste von Teilnehmeridentifikatoren (TNI) gemäß Aspekten der Erfindung. Beispielsweise ist die Liste von TNI 2000 Teil der Telefonanruf-Überwachungsvorrichtung 1220 gemäß Fig. 1. In Fortsetzung des exemplarischen Beispiels aus Fig. 1 enthält die Liste von TNI 2000 mindestens Einträge für die Benutzer A 150, B 250, C 350 und D 450. Die Telefonanschlüsse der Benutzer A 150, B 250, C 350 und D 450 werden in der Liste 2000 in Fig. 2 jeweils durch die TNI-Einträge 100, 200, 300 und 400 repräsentiert. Beispielsweise können die TNI Telefonnummern inklusive Ländervorwahl und Netz bzw. Ortsnetzvorwahl beinhalten. Die TNI können in der Liste gespeichert werden, unabhängig davon, ob es sich um solche handelt, die im Telefoniedienst-Netzwerk 1000 registriert und verwaltet werden, oder außerhalb des Telefoniedienst-Netzwerks 1000 (z.B. in einem Netzwerk eines anderen Netzwerkbetreibers und/oder eines anderen Landes).

Jedem TNI aus der Liste 2000 ist eine Interaktionsmenge (IAM) von Teilnehmeridentifikatoren zugeordnet. In dem exemplarischen Beispiel ist dem TNI 200 des Teilnehmers B die Interaktionsmenge 220 zugeordnet, dem TNI 100 des Teilnehmers A die Interaktionsmenge 120 zugeordnet, dem TNI 300 des Teilnehmers C die Interaktionsmenge 320 zugeordnet sowie dem TNI 400 des Teilnehmers D die Interaktionsmenge 420 zugeordnet. Sofern über einen Telefonanschluss Gespräche geführt wurden, kann eine Interaktionsmenge den TNI von eingegangenen und/oder ausgegangenen Telefonaten enthalten. Im vorliegenden exemplarischen Beispiel sind die Interaktionsmengen der Teilnehmer A, C und D nicht leer, dagegen ist die Interaktionsmenge 220 des Teilnehmers B leer. Dies könnte der Fall sein, wenn B ein neu eingerichteter Teilnehmer ist, bei dem noch keine Telefongespräche eingegangen oder von ihm ausgegangen sind. Im vorliegenden Beispiel sind den TNI 100, 300 und 400 der Teilnehmer A, C und D jeweils TNI und Interaktions-Metriken zugeordnet, welche aus vormaligen Anrufen zwischen den Teilnehmern herrühren.

Beispielsweise enthält Interaktionsmenge 120 ein Element 123 umfassend den TNI des Teilnehmers C, und eine Interaktions-Metrik des Teilnehmers A bezogen auf den Teilnehmer C, abgekürzt bezeichnet als "M(A,C)". Eine Zuordnung des TNI des Teilnehmers C, TNI(C), in der dem Teilnehmer A zugeordneten Interaktionsmenge 120 bedeutet, dass der Teilnehmer A in der Vergangenheit mit C eingehende und/oder ausgehende Telefongespräche hatte. Mit anderen Worten, zwischen den Teilnehmern A und C bzw. deren TNI besteht eine Telefonanruf-Beziehung. Im vorliegenden Beispiel bestehen Telefonanruf-Beziehungen zwischen den Teilnehmern A, C und D, welche in Fig. 2 durch die beidseitigen Pfeile zwischen den TNI 100, 300 und 400 sowie die Elemente 123 und 124 in der Interaktionsmenge 120 des Teilnehmers A, die Elemente 321 und 324 in der Interaktionsmenge 320 des Teilnehmers C sowie durch die Elemente 421 und 423 in der Interaktionsmenge 420 des Teilnehmers D repräsentiert werden. Die TNI in der Liste von Teilnehmeridentifikatoren 2000 und die Telefonanruf-Beziehungen können als Knoten bzw. Kanten eines Sozialnetzwerk-Graphen aufgefasst werden, welcher die Telefonanruf-Beziehungen zwischen Teilnehmern eines Telefonie-Netzwerks darstellt.

Wenngleich vorliegend von einer Telefonanruf-Beziehung die Rede war, so ist die erfindungsgemäße Analyse von Beziehungen nicht auf Telefonanrufe beschränkt. Beispielsweise könnte es sein, dass die Teilnehmer A und C über soziale Netzwerke (z.B. über Messenger-Dienste) in Kontakt stehen, und beispielsweise regelmäßig Nachrichten austauschen. In diesem Fall könnte die erfindungsgemäße Lösung bei der Berechnung der Metriken dies in entsprechender Weise berücksichtigen, soweit die Beziehung zwischen den Teilnehmern A und C auf die jeweiligen TNIs abgebildet bzw. erkannt werden kann.

Die Elemente der Interaktionsmengen 120, 320 und 420 umfassen entsprechende Metriken M(·,·), welche jeweils die Telefonanruf-Beziehungen charakterisieren. Der Wert einer Metrik kann hierbei eine Vertrauenswürdigkeit charakterisieren, beispielsweise als Fließkommazahl zwischen o und 1, wobei 1 eine maximale Vertrauenswürdigkeit charakterisiert. Während die Telefonanruf-Beziehungen symmetrischer Natur sind, weil sie sowohl eingehende als auch ausgehende Anrufe betreffen, können die Metriken einer Telefonanruf-Beziehung durchaus asymmetrisch sein. Beispielsweise ist in Fig. 2 Metrik M(A,C) des Teilnehmers A bezogen auf den Teilnehmer C, M(A,C)=0.94, während die Metrik M(C,A) des Teilnehmers C bezogen auf den Teilnehmer A, M(C,A)=0.99 ist. Dies kann daran liegen, dass beispielsweise bei einem Teilnehmer eingehende und angenommene Anrufe mit unterschiedlichen Metrik-Werten zugeordnet werden können als beispielsweise bei einem Teilnehmer eingehende und nichtangenommene Anrufe. Außerdem können die Interaktions-Metriken der Telefonanruf-Beziehungen davon abhängen, ob zu einem Teilnehmer mehr ausgehende Anrufe als eingehende Anrufe vorhanden sind. Derartige Asymmetrien können sinnfällig sein, beispielsweise um Stalking abzubilden, welches durch einseitiges wiederholtes Anrufen eines Teilnehmers charakterisiert sein kann. Vorliegend wird angenommen, dass der Unterschied zwischen M(A,C)=0.94 und M(C,A)=0.99 unter einem Schwellwert liegt, d.h., gering ist, so dass beidseitig hohe Vertrauenswürdigkeit besteht. Es kann also davon ausgegangen werden, dass Anrufe zwischen den Teilnehmern A und C unabhängig von der Richtung des Anrufs nicht unerwünscht sind.

Im Folgenden soll ein Anruf des Teilnehmers B 250 an den Teilnehmer C betrachtet werden. Da die Interaktionsmenge 220 des Teilnehmers B leer ist, kann die Telefonanruf-Überwachungsvorrichtung 1220 für die Durchführung eines ersten Anrufs eine initiale Interaktions-Metrik M(B,C)=Mₒ=0.5 zuweisen. Im Falle einer nicht-leeren Interaktionsmenge kann die Telefonanruf-Überwachungsvorrichtung 1220 zur Bestimmung der Anruf-Metrik M_{A} des aktuellen Telefonanrufs zusätzlich zur initialen Interaktions-Metrik auch die weiteren Interaktions-Metriken des Teilnehmers B berücksichtigen. Falls überwiegend geringwertige Interaktions-Metriken mehrerer weiterer Teilnehmer X bezogen auf den Teilnehmer B, M(B,X) vorhanden sind, kann die Anruf-Metrik gegenüber der Interaktions-Metrik M(B,C) verringert werden. Falls überwiegend hohe Interaktions-Metriken M(B,X) vorhanden sind, kann die Anruf-Metrik gegenüber der Interaktions-Metrik M(B,C) erhöht werden.

Im nächsten Schritt kann die Telefonanruf-Überwachungsvorrichtung 1220 den Anruf von B nach C verarbeiten. Beispielsweise kann eine Anruf-Metrik geringer als ein unterer Metrik-Schwellwert, z.B. von 0.2, dazu führen, dass der Telefonanruf nicht an den Teilnehmer C weitergeleitet wird, ohne Möglichkeit, den angerufenen Teilnehmeranschluss zu erreichen. Eine Anruf-Metrik im Bereich [0.2 ... 0.5) kann dazu führen, dass der Anrufer auf eine Mailbox weitergeleitet wird, welche eine Verifizierung per Stimme oder Tastatureingabe erfordert, um festzustellen, ob nicht z.B. ein Telefon-Bot oder Robocaller anruft. Eine Anruf-Metrik im Bereich [0.5 ... 0.8] kann dazu führen, dass der Anrufer auf die Mobilbox des Teilnehmers C weitergeleitet wird. Beispielsweise könnte der Anrufer (Originator) aufgefordert werden, kurz seinen Namen aufzusprechen, wobei der Anruf danach sofort weitergeleitet wird und bei dem Rufsignal die aufgenommene Aufzeichnung abgespielt wird. Der Teilnehmer C kann dann basierend auf der abgespielten Aufzeichnung entscheiden, ob er den Anruf annimmt oder nicht. Eine Anruf-Metrik im Bereich größer oder gleich einem oberen Metrik-Schwellwert, z.B. von 0.8, kann zum sofortigen Weiterleiten des Anrufs an den angerufenen Empfänger führen.

Im vorliegenden Fall wird angenommen, dass der Anruf basierend auf der Anruf-Metrik M_{A}=0.5 nicht weitergeleitet wird, sondern zunächst eine Mailbox zwischengeschaltet wird, mit der Aufforderung, dass der Anrufer seinen Namen nenne, wobei die Aufzeichnung dann zusammen mit dem Anrufsignalton abgespielt wird.

Als Ergebnis des Anrufs ist der Anruf also durch den Empfänger angenommen. Des Weiteren hat das Telefongespräch länge als eine Mindestdauer, beispielsweise 923 Sekunden, gedauert. Basierend auf diesem Ergebnis wird die Interaktionsmenge 220 des B sowie die Interaktionsmenge 320 des C aktualisiert. Anstelle eines einzelnen Mindestdauer-Schwellwerts bietet es sich an, die Gesamtdauer des Telefonats bei der Anpassung der Anruf-Metrik beispielsweise gemäß einer direkten Proportionalität zu berücksichtigen.

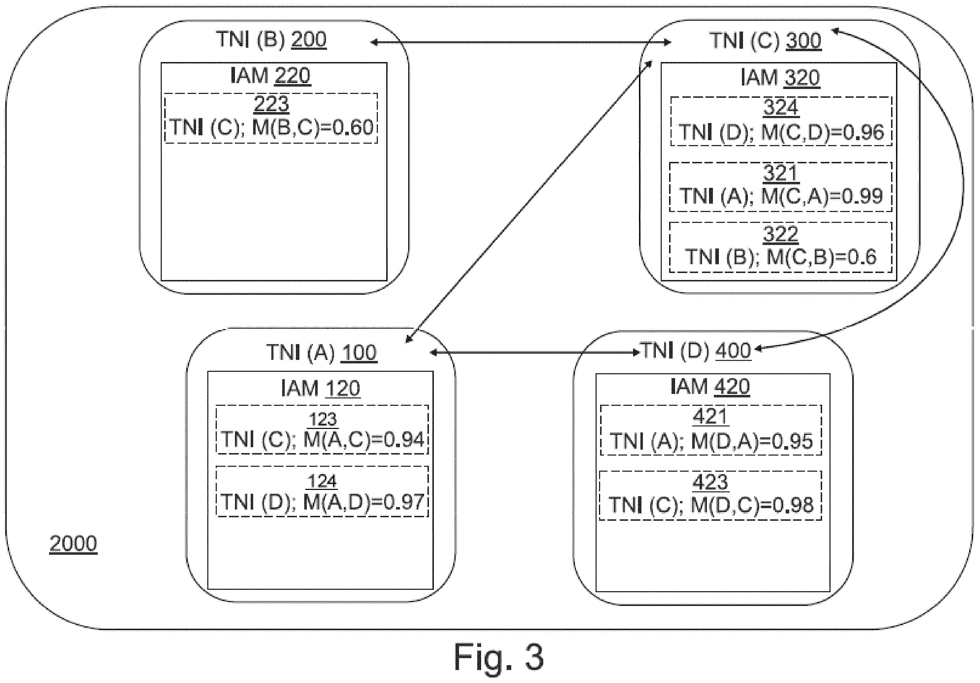

Fig. 3 zeigt eine zweite Liste von Teilnehmeridentifikatoren (TNI) gemäß Aspekten der Erfindung, wobei Interaktionsmengen 220 des B sowie die Interaktionsmenge 320 des C aktualisiert sind.

Basierend auf dem angenommenen Anruf und der relativ langen Gesprächsdauer von 923 Sekunden werden den Interaktionsmengen 220 und 320 die Elemente 223 bzw. 322 hinzugefügt. Das neue Element 223 in der Interaktionsmenge 220 des Teilnehmers B enthält den TNI des Teilnehmers C, TNI(C) sowie eine erhöhte Interaktions-Metrik M(B,C)=0.60. Des Weiteren enthält das neue Element 322 in der Interaktionsmenge 320 des Teilnehmers C den TNI des Teilnehmers B sowie die Interaktions-Metrik M(C,B)=0.6. Die neuen Einträge in den Interaktionsmengen bedeuten eine neue Telefonanruf-Beziehung zwischen B und C.

In einem späteren Telefonat wird Teilnehmer B von D angerufen. Da der TNI von Teilnehmer B nicht Teil der dem TNI 400 in der Liste 2000 zugeordneten Interaktionsmenge 420 ist, wird zunächst eine Zuordnung mit einer initialen Interaktions-Metrik M(D,B)=Mₒ=0.5 angenommen. Jedoch kann untersucht werden, ob zwischen D und B nicht eine indirekte Telefonanruf-Beziehung besteht (wobei, wie bereits erwähnt, die indirekte Beziehung nicht auf Telefonanrufe beschränkt sein muss, sondern auch andere Arten von Beziehungen im Netzwerk erkannt werden können). Vorliegend können die TNI der Interaktionsmenge 420 des Teilnehmers D untersucht werden. Zunächst enthält Interaktionsmenge 420 einen Eintrag 421, der auf den TNI von Teilnehmer A verweist. Die Interaktionsmenge 120 des Teilnehmers A enthält jedoch nicht den Teilnehmer B. Jedoch enthält Interaktionsmenge 420 einen weiteren Eintrag 423 des Teilnehmers C, welcher mit einer relativ hohen Interaktions-Metrik M(D,C)=0.98 belegt ist. Daher führt die festgestellte indirekte Telefonanruf-Beziehung zwischen D und B - über Teilnehmer C - zu einer Erhöhung der Anruf-Metrik gegenüber der (initialen) Interaktions-Metrik M(D,B)=0.5 auf M_{A}=0.8, aufgrund dessen der Anruf sofort an den Teilnehmer B weitergeleitet wird. Die Anruf-Metrik kann also nicht nur von der Interaktions-Metrik des Anrufers (Originators) selbst, sondern auch von den Interaktions-Metriken in festgestellten direkten oder indirekten Telefonanruf-Beziehungen abhängen. Vorliegend sind die Teilnehmer C und D bereits Teil eines Sozialnetzwerks, wobei C zum Empfänger B des aktuellen Anrufs eine relativ hohe Interaktions-Metrik M(C,B) (aufgrund des langen vormaligen Gesprächs zwischen B und C) aufweist, was zu einem "Bonus" bei der Anruf-Metrik führt. Es ist auch möglich, dass ein Unterschreiten einer Schwelle der Interaktions-Metrik bei einer indirekten Telefonanruf-Beziehung zu einer Verringerung der Anruf-Metrik führt. Beispielsweise könnte das vormalige Telefonat zwischen B und C abgewiesen worden sein, was zu einer Interaktions-Metrik M(C,B)=0.35 geführt hätte. Da dies unterhalb einer Schwelle von beispielsweise 0.4 liegt, wird die indirekte Telefonanruf-Beziehung zwischen D und B dahingehend gewertet, dass die Anruf-Metrik nicht gegenüber der (initialen) Interaktions-Metrik M(D,B)=0.5 erhöht ist.

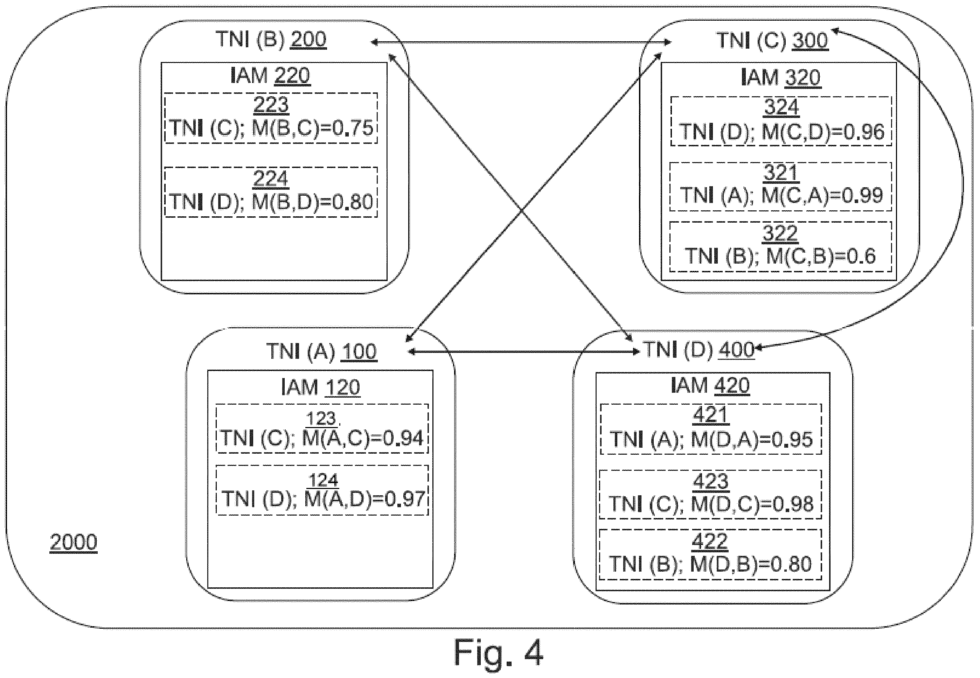

Im vorliegenden exemplarischen Beispiel wird der Anruf von D durch B angenommen, und die Gesprächsdauer beträgt 142 Sekunden. Da dies unterhalb einer Schwelle für die Gesprächsdauer von 150 Sekunden liegt, wird als aktualisierte Interaktions-Metrik in den Interaktionsmengen 420 und 220 der Teilnehmer D und B jeweils der Wert M(D,B)=M(B,D)=0.8 zugeordnet. Fig. 4 zeigt die neuen Elemente 422 bzw. 224 in den Interaktionsmengen. Des Weiteren ist zu bemerken, dass das Sozialnetzwerk eine weitere Kante zwischen D und B aufweist, welches eine direkte Telefonanruf-Beziehung symbolisiert.

In einem späteren Telefonat ruft Teilnehmer B den Teilnehmer A an. Teilnehmer A hat in der Telefonanruf-Überwachungsvorrichtung 1220 eingestellt, dass er keine Anrufe unterhalb einer Anruf-Metrik von 0.9 (d.h. von wahrscheinlich unbekannten Telefonnummern) weitergeleitet haben möchte. Da die Interaktionsmenge 220 von Teilnehmer B noch keine Zuordnung zum TNI(A) enthält (s. Fig. 4) wird zunächst eine Zuordnung mit einer initialen Interaktions-Metrik M(B,A)=Mₒ=0.5 angenommen. Des Weiteren wird eine indirekte Telefonanruf-Beziehung des B mit A festgestellt, und zwar sowohl über Teilnehmer C (über die Elemente 223 und 321 der Interaktionsmengen 220 des Teilnehmers B und 320 des Teilnehmers C) als auch über Teilnehmer D (über die Elemente 224 und 421 der Interaktionsmengen 220 des Teilnehmers B und 420 des Teilnehmers D). Aufgrund der mehrfachen indirekten Telefonanruf-Beziehung zwischen B und A wird die Anruf-Metrik von der initialen Metrik M(B,A)=Mₒ=0.5 auf M_{A}=0.9 erhöht. Basierend auf der vorliegenden Anruf-Metrik wird der Anruf ohne weiteres an A weitergeleitet. Der von A angenommene Anruf dauert beispielhaft 1024 Sekunden.

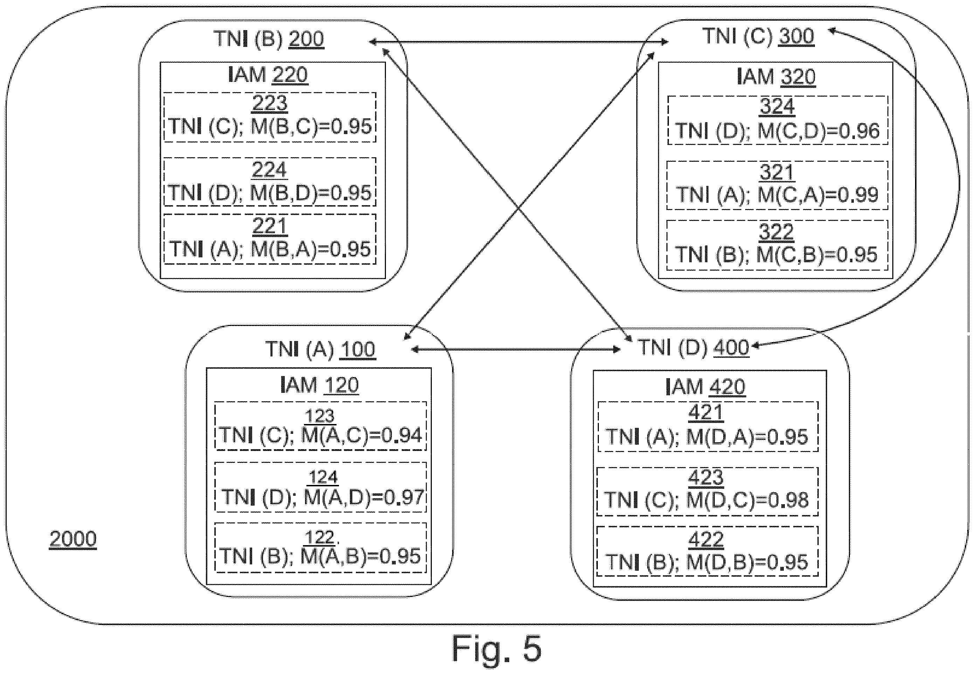

Fig. 5 zeigt beispielhaft eine vierte Liste von Teilnehmeridentifikatoren (TNI), welche sich basierend aufgrund des langen Telefonats zwischen A und B ergibt. Die Liste enthält die neuen Elemente 221 und 122, in welchen jeweils die Anruf-Metriken M(B,A) und M(A,B) auf den Wert 0.95 erhöht wurden, welches sich einerseits aufgrund der langen Gesprächsdauer ergibt, und wobei andererseits auch aufgrund der doppelten Telefonanruf-Beziehung berücksichtigt wird, dass A bereits vor dem Anruf wenigstens indirekt Teil eines Sozialnetzwerks von mehreren Teilnehmern war, welche alle bereits Kontakt mit A hatten. Aus diesem Grund werden auch die Interaktionsmengen 320 und 420 der Teilnehmer C bzw. D bezüglich des Teilnehmers B in den Elementen 322 und 422 auf den Wert 0.95 erhöht. Der Schritt des Aktualisierens der Liste von Teilnehmer-Identifikatoren basierend auf dem Ergebnis des Telefonanrufs kann also nicht nur unmittelbar dem Originator bzw. den Empfänger des Telefonanrufs betreffen, sondern auch die Interaktionsmengen bezüglich TNI, über die eine indirekte Telefonanruf-Beziehung besteht.

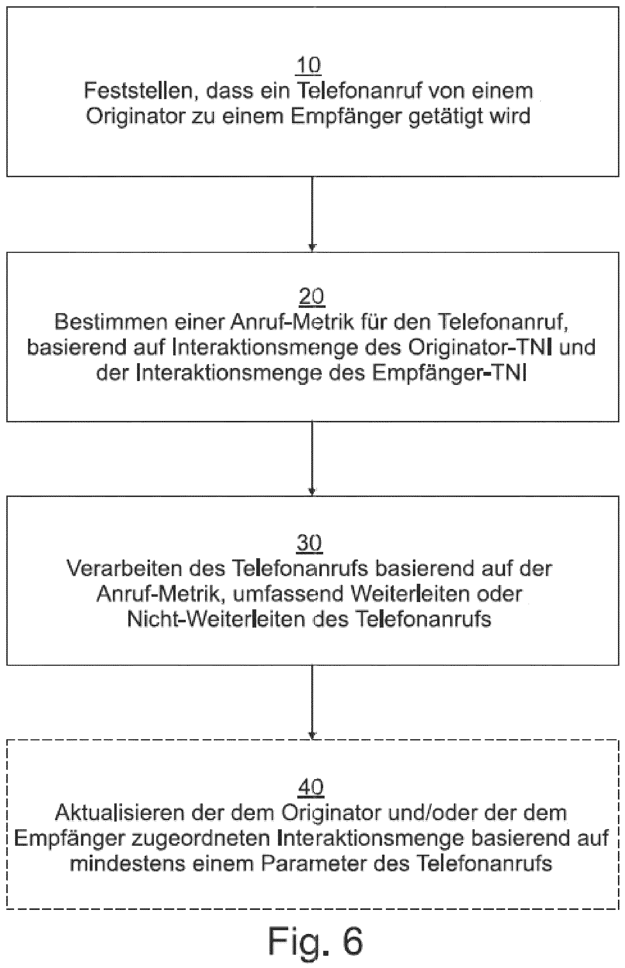

Fig. 6 zeigt ein Ablaufdiagramm des Verfahrens zur Überwachung von Telefonanrufen gemäß Aspekten der Erfindung. Hierbei erfolgt bei Schritt 10 ein Feststellen, dass ein Telefonanruf von einen Originator zu einem Empfänger getätigt wird, wobei der Originator und der Empfänger jeweils einem Teilnehmeridentifikator, TNI, in einer Liste von Teilnehmeridentifikatoren zugeordnet sind. Insbesondere ist jedem TNI aus der Liste der Teilnehmeridentifikatoren eine Interaktionsmenge von weiteren Teilnehmeridentifikatoren zugeordnet ist, und jede dieser Zuordnungen umfasst eine Interaktions-Metrik bezogen auf den TNI und dem jeweiligen weiteren TNI der Interaktionsmenge. Bei Schritt 20 erfolgt ein Bestimmen einer Anruf-Metrik für den Telefonanruf, basierend auf der Interaktionsmenge des Originator-TNI und der Interaktionsmenge des Empfänger-TNI. Bei Schritt 30 erfolgt ein Verarbeiten des Telefonanrufs basierend auf der Anruf-Metrik, wobei das Verarbeiten wenigstens ein Weiterleiten an den Empfänger oder ein Nicht-Weiterleiten des Telefonanrufs umfasst. Vorzugsweise erfolgt weiterhin bei Schritt 40 ein Aktualisieren der dem Originator und/oder der dem Empfänger zugeordneten Interaktionsmenge basierend auf mindestens einem Parameter des Telefonanrufs, wobei das Aktualisieren vorzugsweise eine Anpassung der Interaktions-Metrik umfasst, wie vorstehend bereits ausführlich dargelegt wurde.

Bei der vorliegenden Offenbarung der Erfindung wurden beispielhaft Regeln und Werte genannt, gemäß derer eine Anruf-Metrik abhängig von bestimmten Bedingungen, wie z.B. das Bestehen von direkten und indirekten Telefonanruf-Beziehungen oder anderen Sozialnetzwerk-Beziehungen zwischen einem Originator und einem Empfänger eines Telefonanrufs bestimmt wird. Des Weiteren wurden beispielhaft Regeln und Werte genannt, gemäß derer die Interaktions-Metriken bezüglich Teilnehmeridentifikatoren in einem Telefoniedinst-Netzwerk basierend auf einem Ergebnis eines Telefonanrufs zwischen einem Originator und einem Empfänger aktualisiert werden können. Es sei angemerkt, dass die einzelnen genannten Regeln und Werte nicht abschließend aufzufassen sind. Vielmehr kann die Bestimmung einer Anruf-Metrik und der aktualisierten Interaktions-Metriken auf dem Zusammenwirken mehrerer Regeln inklusive weiterer in der vorliegenden Offenbarung der Erfindung nicht enthaltenen Regeln und Werte beruhen. In einem Ausführungsbeispiel beruhen die Regeln und Werte auf Verfahren, welche mit Algorithmen des maschinellen Lernens (ML) trainiert und bestimmt werden.

## Patentansprüche

1. Verfahren zur Überwachung von Telefonanrufen, das Verfahren umfassend die folgenden Schritte:
Feststellen (10), dass ein Telefonanruf von einen Originator zu einem Empfänger getätigt wird, wobei der Originator und der Empfänger jeweils einem Teilnehmeridentifikator, TNI, in einer Liste von Teilnehmeridentifikatoren (2000) zugeordnet sind,
wobei jedem TNI (100, 200, 300, 400) aus der Liste der Teilnehmeridentifikatoren eine Interaktionsmenge von weiteren Teilnehmeridentifikatoren (120, 220, 320, 420) zugeordnet ist, und wobei jede dieser Zuordnungen eine Interaktions-Metrik (123, 124; 321, 324; 421, 423) bezogen auf den TNI und dem jeweiligen weiteren TNI der Interaktionsmenge umfasst;
Bestimmen (20) einer Anruf-Metrik für den Telefonanruf, basierend auf der Interaktionsmenge des Originator-TNI und der Interaktionsmenge des Empfänger-TNI;
Verarbeiten (30) des Telefonanrufs basierend auf der Anruf-Metrik, wobei das Verarbeiten wenigstens ein Weiterleiten an den Empfänger oder ein Nicht-Weiterleiten des Telefonanrufs umfasst,
wobei die Anruf-Metrik gegenüber der Interaktions-Metrik des Originators bezogen auf den Empfänger verringert wird, wenn ein Anrufaufkommen im Telefoniedienst-Netzwerk einen Netzwerklast-Schwellwert überschreitet.

2. Verfahren gemäß Anspruch 1, weiterhin umfassend:
Aktualisieren (40) der dem Originator und/oder der dem Empfänger zugeordneten Interaktionsmenge basierend auf mindestens einem Parameter des Telefonanrufs, wobei das Aktualisieren vorzugsweise eine Anpassung der Interaktions-Metrik umfasst.

3. Verfahren gemäß Anspruch 2, wobei der mindestens eine Parameter des Telefonanrufs die Annahme oder Nichtannahme des Telefonanrufs durch den Empfänger oder die Dauer des Gesprächs umfasst.

4. Verfahren gemäß einem der Ansprüche 2 oder 3, wobei die dem Originator-TNI zugeordnete Interaktionsmenge (220) von weiteren Teilnehmeridentifikatoren keine Zuordnung des Empfänger-TNI umfasst, und das Aktualisieren (40) der dem Originator und/oder der dem Empfänger zugeordneten Interaktionsmenge eine Aufnahme des Empfänger-TNI in der dem Originator-TNI zugeordneten Interaktionsmenge und/oder eine Aufnahme des Originator-TNI in der dem Empfänger-TNI zugeordneten Interaktionsmenge umfasst.

5. Verfahren gemäß einem der Ansprüche 2 bis 4, wobei das Aktualisieren (40) der dem Originator und/oder der dem Empfänger zugeordneten Interaktionsmenge ein Erhöhen der Interaktions-Metrik des Originators bezogen auf den Empfänger umfasst, wenn der Telefonanruf angenommen wurde.

6. Verfahren gemäß Anspruch 5, wobei die Erhöhung abhängig von der Dauer des Telefonanrufs ist.

7. Verfahren gemäß einem der Ansprüche 2 bis 4, wobei das Aktualisieren (40) der dem Originator und/oder der dem Empfänger zugeordneten Interaktionsmenge ein Verringern der Interaktions-Metrik des Originators bezogen auf den Empfänger umfasst, wenn der Anruf nicht angenommen wurde, durch den Empfänger abgelehnt wurde oder wenn die Dauer des Anrufs kürzer als ein Anrufdauer-Schwellwert war.

8. Verfahren gemäß einem der Ansprüche 2 bis 7, wobei das Aktualisieren (40) der dem Originator und/oder der dem Empfänger zugeordneten Interaktionsmenge umfasst:
Bestimmen einer ersten Anzahl von TNI in der Interaktionsmenge des Originators, welche mindestens einen eingegangenen Anruf aufweisen;
Bestimmen einer zweiten Anzahl von TNI in der Interaktionsmenge des Originators, welche nur vom Originator ausgegangene Anrufe aufweisen;
wobei die Interaktions-Metrik des Originators bezogen auf den Empfänger erhöht wird, falls das Verhältnis aus der ersten Anzahl und der zweiten Anzahl oberhalb eines Anrufrichtungs-Schwellenwertes liegt.

9. Verfahren gemäß einem der vorangehenden Ansprüche, wobei das Bestimmen der Anruf-Metrik umfasst:
Bestimmen einer ersten Anzahl von TNI in der Interaktionsmenge des Originators, welche mindestens einen eingegangenen Anruf aufweisen;
Bestimmen einer zweiten Anzahl von TNI in der Interaktionsmenge des Originators, welche nur vom Originator ausgegangene Anrufe aufweisen;
wobei die Anruf-Metrik gegenüber der Interaktions-Metrik des Originators bezogen auf den Empfänger erhöht wird, falls das Verhältnis aus der ersten Anzahl und der zweiten Anzahl oberhalb eines Anrufrichtungs-Schwellenwertes liegt.

10. Verfahren gemäß einem der vorangehenden Ansprüche, wobei das Bestimmen der Anruf-Metrik erhältlich ist durch:
Abbilden einer Beziehung zwischen Empfänger-TNI und Originator-TNI in einem Baumdiagramm;
Feststellen, ob der Empfänger-TNI als Ergebnis einer N-Stufigen Suche im Baumdiagramm ausgehend dem Originator-TNI oder der dem Originator-TNI zugeordneten Interaktionsmenge als auffindbar erhältlich ist.

11. Verfahren gemäß Anspruch 10, wobei die Anruf-Metrik gegenüber der Interaktions-Metrik des Originators bezogen auf den Empfänger nicht verändert oder verringert wird, falls die Anzahl N der Suche mehr als einem Schwellwert von Stufen entspricht.

12. Verfahren gemäß Anspruch 10, wobei die Anruf-Metrik gegenüber der Interaktions-Metrik des Originators bezogen auf den Empfänger entsprechend einer Häufigkeit, wie oft der Empfänger-TNI in einer Stufe der Suche als auffindbar erhältlich ist, erhöht wird.

13. Vorrichtung umfassend Mittel, die dazu eingerichtet sind, das Verfahren gemäß jedwedem der Ansprüche 1 bis 12 auszuführen.

14. Computerprogramm umfassend Programmanweisungen, welche, wenn das Programm durch einen Computer ausgeführt wird, diesen dazu veranlassen, alle Schritte des Verfahrens gemäß jedwedem der Ansprüche 1 bis 12 auszuführen.

## Claims

1. Method for monitoring telephone calls, the method comprising the following steps:
Determining (10) that a telephone call is being made from an originator to a recipient, wherein the originator and the recipient are each associated with a subscriber identifier, TNI, in a list of subscriber identifiers (2000),
wherein each TNI (100, 200, 300, 400) from the list of subscriber identifiers is associated with an interaction set of further subscriber identifiers (120, 220, 320, 420), and wherein each of these associations comprises an interaction metric (123, 124; 321, 324; 421, 423) with respect to the TNI and the respective further TNI of the interaction set;
Determining (20) a call metric for the telephone call, based on the interaction set of the originator TNI and the interaction set of the recipient TNI;
Processing (30) the telephone call based on the call metric, wherein the processing comprises at least one of forwarding to the recipient or not forwarding the telephone call,
wherein the call metric is reduced relative to the interaction metric of the originator with respect to the recipient, if a call volume in the telephony service network exceeds a network load threshold.

2. Method according to claim 1, further comprising:
Updating (40) the interaction set associated with the originator and/or the recipient based on at least one parameter of the telephone call, wherein the updating preferably comprises an adjustment of the interaction metric.

3. Method according to claim 2, wherein the at least one parameter of the telephone call comprises the acceptance or non-acceptance of the telephone call by the recipient, or the duration of the conversation.

4. Method according to any one of claims 2 or 3, wherein the interaction set (220) of further subscriber identifiers associated with the originator TNI does not comprise an association of the recipient TNI, and the updating (40) of the interaction set associated with the originator and/or the recipient comprises an inclusion of the recipient TNI in the interaction set associated with the originator TNI and/or an inclusion of the originator TNI in the interaction set associated with the recipient TNI.

5. Method according to any one of claims 2 to 4, wherein the updating (40) of the interaction set associated with the originator and/or the recipient comprises increasing the interaction metric of the originator with respect to the recipient, if the telephone call was accepted.

6. Method according to claim 5, wherein the increase depends on the duration of the telephone call.

7. Method according to any one of claims 2 to 4, wherein the updating (40) of the interaction set associated with the originator and/or the recipient comprises decreasing the interaction metric of the originator with respect to the recipient, if the call was not accepted, was rejected by the recipient, or if the duration of the call was shorter than a call duration threshold.

8. Method according to any one of claims 2 to 7, wherein the updating (40) of the interaction set associated with the originator and/or the recipient comprises:
Determining a first number of TNIs in the interaction set of the originator that have received at least one incoming call;
Determining a second number of TNIs in the interaction set of the originator that have only outgoing calls from the originator;
wherein the interaction metric of the originator with respect to the recipient is increased if the ratio of the first number to the second number is above a call direction threshold.

9. Method according to any one of the preceding claims, wherein determining the call metric comprises:
Determining a first number of TNIs in the interaction set of the originator that have received at least one incoming call;
Determining a second number of TNIs in the interaction set of the originator that have only outgoing calls from the originator;
wherein the call metric is increased relative to the interaction metric of the originator with respect to the recipient, if the ratio of the first number to the second number is above a call direction threshold.

10. Method according to any one of the preceding claims, wherein determining the call metric is obtainable by:
Mapping a relationship between the recipient TNI and the originator TNI in a tree diagram;
Determining whether the recipient TNI is obtainable as a result of an N-level search in the tree diagram, starting from the originator TNI or the interaction set associated with the originator TNI.

11. Method according to claim 10, wherein the call metric is not changed or is reduced relative to the interaction metric of the originator with respect to the recipient, if the number N of the search corresponds to more than a threshold value of levels.

12. Method according to claim 10, wherein the call metric is increased relative to the interaction metric of the originator with respect to the recipient, in accordance with a frequency indicating how often the recipient TNI is obtainable in a level of the search.

13. Device comprising means configured to carry out the method according to any one of claims 1 to 12.

14. Computer program comprising program instructions which, when the program is executed by a computer, cause the computer to carry out all steps of the method according to any one of claims 1 to 12.

## Revendications

1. Procédé de surveillance d'appels téléphoniques, le procédé comprenant les étapes suivantes :
Déterminer (10) qu'un appel téléphonique est effectué d'un initiateur vers un destinataire, l'initiateur et le destinataire étant chacun associé à un identifiant d'abonné, TNI, dans une liste d'identifiants d'abonnés (2000),
chaque TNI (100, 200, 300, 400) de la liste des identifiants d'abonnés étant associé à un ensemble d'interactions d'autres identifiants d'abonnés (120, 220, 320, 420), et chacune de ces associations comprenant une métrique d'interaction (123, 124 ; 321, 324 ; 421, 423) relative au TNI et au TNI supplémentaire respectif de l'ensemble d'interactions ;
Déterminer (20) une métrique d'appel pour l'appel téléphonique, sur la base de l'ensemble d'interactions du TNI de l'initiateur et de l'ensemble d'interactions du TNI du destinataire ;
Traiter (30) l'appel téléphonique sur la base de la métrique d'appel, le traitement comprenant au moins un transfert vers le destinataire ou un non-transfert de l'appel téléphonique,
la métrique d'appel étant réduite par rapport à la métrique d'interaction de l'initiateur relative au destinataire, lorsque le volume d'appels dans le réseau de service téléphonique dépasse un seuil de charge réseau.

2. Procédé selon la revendication 1, comprenant en outre :
Mettre à jour (40) l'ensemble d'interactions associé à l'initiateur et/ou au destinataire sur la base d'au moins un paramètre de l'appel téléphonique, la mise à jour comprenant de préférence un ajustement de la métrique d'interaction.

3. Procédé selon la revendication 2, dans lequel l'au moins un paramètre de l'appel téléphonique comprend l'acceptation ou le refus de l'appel téléphonique par le destinataire, ou la durée de la conversation.

4. Procédé selon l'une des revendications 2 ou 3, dans lequel l'ensemble d'interactions (220) d'autres identifiants d'abonnés associé au TNI de l'initiateur ne comprend pas d'association du TNI du destinataire, et la mise à jour (40) de l'ensemble d'interactions associé à l'initiateur et/ou au destinataire comprend une inclusion du TNI du destinataire dans l'ensemble d'interactions associé au TNI de l'initiateur et/ou une inclusion du TNI de l'initiateur dans l'ensemble d'interactions associé au TNI du destinataire.

5. Procédé selon l'une des revendications 2 à 4, dans lequel la mise à jour (40) de l'ensemble d'interactions associé à l'initiateur et/ou au destinataire comprend une augmentation de la métrique d'interaction de l'initiateur relative au destinataire, lorsque l'appel téléphonique a été accepté.

6. Procédé selon la revendication 5, dans lequel l'augmentation dépend de la durée de l'appel téléphonique.

7. Procédé selon l'une des revendications 2 à 4, dans lequel la mise à jour (40) de l'ensemble d'interactions associé à l'initiateur et/ou au destinataire comprend une réduction de la métrique d'interaction de l'initiateur relative au destinataire, lorsque l'appel n'a pas été accepté, a été rejeté par le destinataire, ou lorsque la durée de l'appel était inférieure à un seuil de durée d'appel.

8. Procédé selon l'une des revendications 2 à 7, dans lequel la mise à jour (40) de l'ensemble d'interactions associé à l'initiateur et/ou au destinataire comprend :
Déterminer un premier nombre de TNI dans l'ensemble d'interactions de l'initiateur, qui ont reçu au moins un appel entrant ;
Déterminer un deuxième nombre de TNI dans l'ensemble d'interactions de l'initiateur, qui n'ont que des appels sortants de l'initiateur ;
la métrique d'interaction de l'initiateur relative au destinataire étant augmentée si le rapport entre le premier nombre et le deuxième nombre est supérieur à un seuil de direction d'appel.

9. Procédé selon l'une des revendications précédentes, dans lequel la détermination de la métrique d'appel comprend :
Déterminer un premier nombre de TNI dans l'ensemble d'interactions de l'initiateur, qui ont reçu au moins un appel entrant ;
Déterminer un deuxième nombre de TNI dans l'ensemble d'interactions de l'initiateur, qui n'ont que des appels sortants de l'initiateur ;
la métrique d'appel étant augmentée par rapport à la métrique d'interaction de l'initiateur relative au destinataire, si le rapport entre le premier nombre et le deuxième nombre est supérieur à un seuil de direction d'appel.

10. Procédé selon l'une des revendications précédentes, dans lequel la détermination de la métrique d'appel est obtenue par :
La représentation d'une relation entre le TNI du destinataire et le TNI de l'initiateur dans un diagramme arborescent ;
La détermination si le TNI du destinataire est accessible en tant que résultat d'une recherche à N niveaux dans le diagramme arborescent, à partir du TNI de l'initiateur ou de l'ensemble d'interactions associé au TNI de l'initiateur.

11. Procédé selon la revendication 10, dans lequel la métrique d'appel n'est pas modifiée ou est réduite par rapport à la métrique d'interaction de l'initiateur relative au destinataire, si le nombre N de la recherche correspond à plus d'une valeur seuil de niveaux.

12. Procédé selon la revendication 10, dans lequel la métrique d'appel est augmentée par rapport à la métrique d'interaction de l'initiateur relative au destinataire, en fonction de la fréquence à laquelle le TNI du destinataire est accessible à un niveau de la recherche.

13. Dispositif comprenant des moyens configurés pour mettre en œuvre le procédé selon l'une quelconque des revendications 1 à 12.

14. Programme informatique comprenant des instructions de programme qui, lorsque le programme est exécuté par un ordinateur, amènent celui-ci à mettre en œuvre toutes les étapes du procédé selon l'une quelconque des revendications 1 à 12.
